Europäisches Patentamt

**European Patent Office**

**Office européen des brevets**

(19)

(11) Publication number: **0 232 615**
A2

# EUROPEAN PATENT APPLICATION

(12)

(21) Application number: **86309963.6**

(22) Date of filing: **19.12.86**

(51) Int. Cl.⁴: **C 01 G 23/02**, C 22 B 34/12,
C 01 G 49/10

(30) Priority: **10.01.86  US 817545**

(43) Date of publication of application: **19.08.87**
**Bulletin 87/34**

(84) Designated Contracting States: **BE DE ES FR GB IT NL**

(71) Applicant: **E.I. DU PONT DE NEMOURS AND COMPANY,
1007 Market Street, Wilmington Delaware 19898 (US)**

(72) Inventor: **Maurer, John Frederick, 306 Glen Berne Drive,
Wilmington Delaware 19804 (US)**

(74) Representative: **Woodcraft, David Charles et al,
BROOKES & MARTIN High Holborn House 52/54 High
Holborn, London, WC1V 6SE (GB)**

(54) **Liquid phase adsorption and oxidation of ferric chloride using a eutectic salt complex.**

(57) A continuous process is disclosed for adsorbing and oxidizing ferric chloride, comprising cooling the exit gas stream, adsorbing ferric chloride in a NaCl–FeCl₃ liquid eutectic salt, and reacting, in the liquid phase, a molar excess of the resulting eutectic salt mixture with oxygen to provide chlorine.

EP 0 232 615 A2

## TITLE
### Liquid Phase Adsorption and Oxidation
### of Ferric Chloride
### Using a Eutectic Salt Complex

## BACKGROUND OF THE INVENTION

### 1. Technical Field

The present invention relates generally to processes for separating iron chlorides from gas mixtures of titanium tetrachloride and iron chlorides. In particular, the present invention provides an improved process for liquid-phase adsorption and oxidation of ferric chloride, using a sodium chloride-ferric chloride eutectic salt.

### 2. Description of the Prior Art

An important industrial process for production of pigmentary titanium dioxide involves chlorination of titaniferous ores, e.g., rutile or ilmenite, to produce titanium tetrachloride ($TiCl_4$), which is subsequently oxidized. In this reaction, coke, chlorine, and a titanium-containing ore are reacted at temperatures ranging from $700^{\circ}$ to $1200^{\circ}C$, typically in a fluidized bed reactor. The hot chlorination gases resulting from this reaction contain primarily titanium tetrachloride and iron chloride impurities, namely ferric chloride and ferrous chloride. Lesser quantities of other metal chloride byproducts, unreacted coke and ore, gangue, carbon monoxide, and carbon dioxide also exit the chlorination reactor.

This mixture of gases and solids is then further processed to separate $TiCl_4$ from the remaining chlorides and waste solids. Typically, the gases leaving the chlorination reactor are flue cooled. Particulate coke and ore materials can then be removed from the chloride vapors at temperatures above their dew point by centrifugation, filtration, or cyclone separating. If particulate solids are not removed initially, they can subsequently be removed with solid iron chlorides at temperatures below the dew point of ferric chloride.

Removal of iron chlorides from the chlorination gases is a significant problem in production of substantially pure titanium tetrachloride. Of the most common ore feedstocks, rutile contains about 90-96% titanium dioxide and 1 to 7% iron oxide. Ilmenite, a preferred feedstock due to cost, contains 40-65% titanium dioxide and 30-60% iron oxide. Thus, iron chlorides make up a considerable portion of chlorination gases, particularly in ilmenite-based processes. Iron chlorides are generally removed from chlorinator effluent gases by flue-cooling the gases and then injecting cooling liquids, for example, liquid titanium tetrachloride, into the chlorination gases, in a spray condenser. Ferric chloride can then be removed by partial condensation from the cooled vapors containing titanium tetrachloride. Several cyclone or filter stages or cycles may be needed to remove iron chlorides, which are then generally discarded.

Although a portion of the resulting iron chloride by-product stream can be diverted to other uses, a significant proportion must be disposed of by landfilling or deep-well injection. The costs associated with safe disposal of iron chloride wastes are rising. Moreover, a significant quantity of potentially recoverable chlorine is lost when iron chloride wastes are discarded. These considerations have led to a search for alternative methods for handling ferric chloride-containing waste streams.

Krchma, U. S. Patent 2,533,021, discloses use of a eutectic mixture of sodium chloride and ferric chloride to condense gaseous ferric chloride from $TiO_2$ chlorinator effluent streams.

Perkins et al., U. S. Bureau of Mines Report of Investigation #5428, and Nieberlein, U. S. Bureau of Mines Report of Investigation #5602, proposed separation of ferric chloride from titanium tetrachloride vapors, such as those generated by chlorination of ilmenite, by converting the ferric chloride to a molten salt complex with sodium chloride while withdrawing the titanium tetrachloride from the molten salt complex as a vapor.

Cook et al., J. Phys. Chem. 65:1505 (1961) investigated the reaction of ferric chloride with sodium chloride to produce sodium ferric tetrachloride, according to the following equation:

$$NaCl + FeCl_3 \longrightarrow NaFeCl_4.$$

Melts of NaCl and $NaFeCl_4$ are capable of adsorbing $FeCl_3$ vapor to form a eutectic salt complex having a very low $FeCl_3$ vapor pressure. The resulting complex can be readily reacted with oxygen to liberate available chlorine:

$$1 \; 1/2 \; O_2 + 2 \; NaFeCl_4 \longrightarrow Fe_2O_3 + 2 \; NaCl + 3 \; Cl_2$$

Dunn et al., U. S. Patent 3,376,112, describe a process for production of chlorine by oxidation of ferric chloride salt complexes. According to this reference, an oxygen-containing gas is reacted with a ferric chloride-sodium chloride salt complex, in a closed reaction vessel at temperatures ranging from $400^{\circ}-750^{\circ}C$, under anhydrous conditions. The molten salt is driven at high velocity onto a bed of inert particles such as iron oxide pellets, glass beads, silica chips, or alumina chips. The resulting thin film of salt on the solid support maximizes contact with the oxidizing gas. Byproduct $Fe_2O_3$ forms as a coating on the bed particles, which must be periodically or continuously withdrawn, cleaned, and recycled to the reactor.

Bonsack, U. S. Patent 3,944,647, discloses separation of ferric chloride from titanium tetrachloride-ferric chloride gas mixtures by contact with sodium chloride, followed by oxidation of the resulting salt complex to enable chlorine recovery. The salient aspects of the Bonsack process include contacting a feed vapor containing $TiCl_4$ and $FeCl_3$ with NaCl in a "complexing zone" at a temperature of about $300^{\circ}C$; withdrawing $TiCl_4$ as a vapor; withdrawing the resulting molten salt complex from the complexing zone; atomizing the withdrawn salt complex; mixing the atomized complex with oxygen in a reactor at a temperature from about $400^{\circ}$ to about $750^{\circ}$, resulting in production of $Fe_2O_3$, NaCl, and chlorine; and withdrawing the chlorine and solid byproducts. Optionally, the product stream of chlorine gas can be reintroduced to the "complexing zone" in the absence of feed vapor, to remove ferric chloride residues.

However, the above-described ferric chloride oxidation processes have not been implemented on an industrial scale, due to technical difficulties. In vapor-phase oxidation systems, by-products $Fe_2O_3$ and NaCl are usually deposited as a black, crystalline scale upon bed particle surfaces. Pilot plant studies of $NaFeCl_4$ moving bed reactors indicated serious problems with bed sticking, corrosion, and undesireable mechanical complexity. Fluid-bed and transport reactors were also evaluated at pilot-plant scale. These reactors were limited in capacity and experienced problems with bed flow control and residual ferric chloride condensation in the fluid bed. Thus, the promise of eutectic salt absorption/ferric chloride oxididation technology has not been realized. The present invention provides an improved process which has been engineered to eliminate the shortcomings of previous systems.

4

## SUMMARY OF THE INVENTION

The present invention provides a continuous process for adsorbing ferric chloride from a titaniferous ore chlorinator exit gas stream, and for producing chlorine from the adsorbed ferric chloride, comprising:

(a) cooling the exit gas stream to a temperature from about $350^{\circ}C$ to about $450^{\circ}C$;

(b) contacting the cooled exit gas stream with a liquid $NaCl-FeCl_3$ eutectic salt complex, at a temperature from about $200^{\circ}C$ to about $350^{\circ}C$, to form a eutectic salt mixture comprising adsorbed $FeCl_3$;

(c) separating nonadsorbed components of the gas stream from the eutectic salt mixture;

(d) contacting, in a liquid phase oxidation zone, at a temperature from about $300^{\circ}C$ to about $500^{\circ}C$ and at a pressure from about 500 to about 5000 kPa, a molar excess of the eutectic salt mixture with oxygen to produce chlorine;

(e) withdrawing chlorine from the oxidation zone; and

(f) recycling unreacted components of the eutectic salt mixture to the oxidation zone.

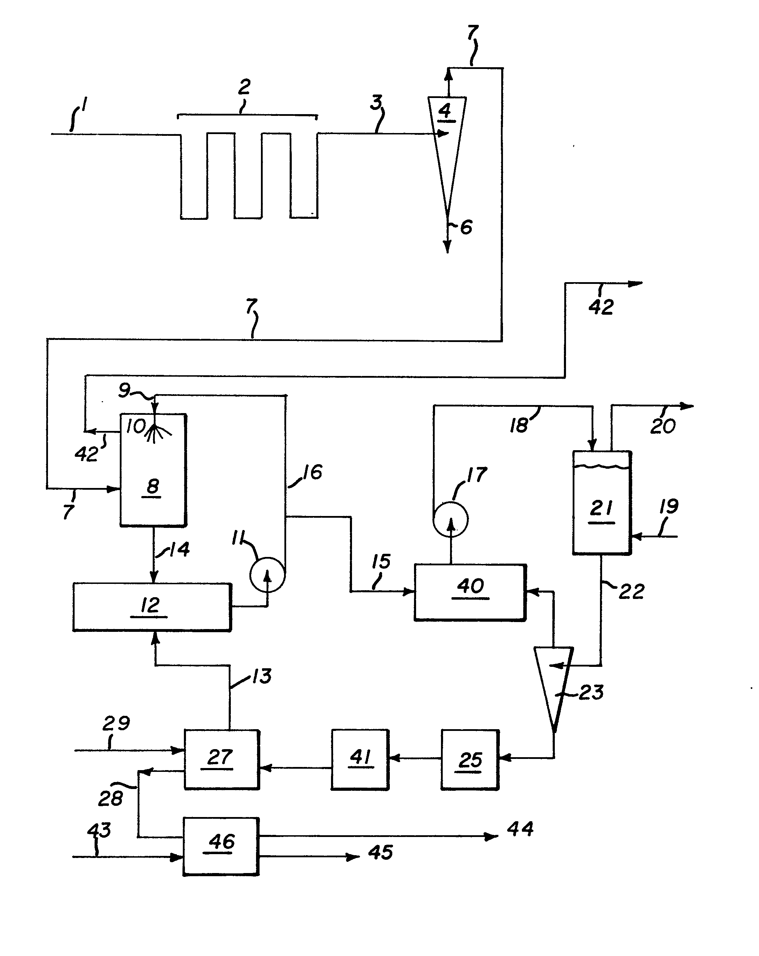

## BRIEF DESCRIPTION OF THE DRAWING

The drawing is a flow diagram depicting process flows involved in one embodiment of the present invention. The drawing is described in additional detail below.

## DESCRIPTION OF THE INVENTION

The process of the present invention resides in four principal process stages:

    1.  chlorinator effluent gas cooling with solids removal;

    2.  ferric chloride adsorption in eutectic salt complex;

    3.  oxidation of ferric chloride; and

    4.  recycle of residual eutectic.

Specific details regarding operation of each of the foregoing process stages are provided in the following paragraphs.

The process of the present invention is suitable for coupling to a chlorination reactor of a pigmentary titanium dioxide plant or to a chlorination reactor which produces essentially iron chloride and beneficiated $TiO_2$ ore.

In a typical ilmenite total chlorination operation, a bed of coke and ore is fluidized with chlorine at a temperature from about $700^{\circ}C$ to $1200^{\circ}C$ and at a pressure of about 1-2 atmospheres (101 - 203 kPa). Generally, solids fed to the bed will contain from 15-40% coke, preferably around 20% coke, with the balance being ore. These materials are conventionally processed for fluidizing. The process of this invention is primarily designed for application to chlorinator systems which are in "ferric" operation, i.e., producing ferric chloride rather than ferrous chloride as the principal iron chloride by-product.

### 1.  Chlorinator Effluent Gas Cooling

The effluent exit gas stream from a titaniferous ore chlorinator contains titanium tetrachloride, iron chlorides, aluminum chloride, miscellaneous metal chlorides ($CaCl_2$, $MgCl_2$, $SiCl_4$,

$MnCl_2$), unreacted coke and ore, gangue, carbon dioxide, carbon monoxide, chlorine, and certain other by-products or impurities. The effluent stream exits the chlorinator at temperatures ranging from $500^{\circ}C$–$1000^{\circ}C$, and contains unreacted, or "blow-over," coke and ore. For operation in accordance with the present invention, this chlorinator effluent stream should be cooled to a temperature from about $350^{\circ}C$ to about $450^{\circ}C$, preferably from $380^{\circ}C$ to $420^{\circ}C$, prior to introduction to the next process stage.

Cooling can be accomplished by flue cooling apparatus, or by spray-cooling with a suitable liquid, i.e., $TiCl_4$. Where the adsorption process of the present invention is added to processes relying upon spray-cooling, the overall rate of $TiCl_4$ injection can be reduced, since added heat will be removed in the adsorption process stage.

Following cooling, particulate coke, ore, and various high-boiling chlorides can be rejected using suitable means, for example, cyclones or other filtration equipment. Optionally, part of these materials can be recycled to the chlorinator.

## 2. Ferric Chloride Adsorption in Eutectic Salt Complex

In the next process stage, the cooled exit gas stream derived from the first process stage is routed to a process loop wherein ferric chloride is selectively adsorbed in a sodium chloride-ferric chloride liquid eutectic salt complex. As used throughout the specification, the term "$NaCl$–$FeCl_3$ eutectic salt complex" refers to molten mixtures of $NaCl$, $FeCl_3$, and/or $NaFeCl_4$ containing between 48 to 65 mol percent $FeCl_3$ and 35 to 52 mol percent $NaCl$ or equivalent molar values in the form of $NaFeCl_4$. "Eutectic salt slurry" refers to a pumpable mixture of eutectic salt and excess solid $NaCl$ and/or iron oxides.

The adsorption process loop preferably consists of an adsorber, which can be a suitably sized cylindrical reactor, and a salt storage tank or tanks. All process vessels and interconnecting conduits should be fabricated from corrosion-resistant materials. The hot gas discharge from the cooling stage enters the adsorber and flows countercurrently with respect to a stream of eutectic salt liquid. Ferric chloride and aluminum chloride are readily adsorbed and react with the salt exothermically to form the eutectic salts $NaFeCl_4$ and $NaAlCl_4$. The adsorber operates at essentially atmospheric pressure (100-150 kPa), and in the temperature range from about 200°C to about 450°C. Preferably, adsorber temperatures are maintained from about 250°C to about 370°C. At lower adsorber temperatures, corrosion problems are reduced. The adsorption/reaction step is exothermic; heat must be removed from the system to maintain steady-state conditions. This can be accomplished by cycling a portion of the molten eutectic from the adsorber system to a waste heat boiler, or optionally, by jacketing the adsorber.

Countercurrent selective adsorption/reaction of the gaseous ferric chloride component into a slurry of salt in eutectic salt liquid provides an efficient separation from the chlorinator product stream. The separation is highly selective due to the very low (<0.1 mm Hg) vapor pressure of ferric chloride over the incoming eutectic salt. $TiCl_4$, $CO_2$, CO, and other by-products are essentially insoluble in the eutectic salt at the salts outlet temperature. The low vapor pressure of ferric chloride over the inlet eutectic salt melt ensures that minimal iron values are passed through this system to subsequent $TiCl_4$ purification steps.

Eutectic salt slurry can be formed by initially feeding sodium chloride to the storage tanks

0232615

and adding ferric chloride and heat.  Since the 1:1
eutectic melts at 158$^\circ$C, hot oil can be employed to
initiate the process.  Chloride salts are recycled from
the oxidizer to the adsorber loops, and additional NaCl
make-up is added to balance material flows.

It should be noted that various proportions of
NaCl and FeCl$_3$ in the salt complex or mixture are
suitable for initial start-up, although a 1:1 molar
ratio provides the low-melting eutectic which is
preferred.  The salt complex can vary between 48 to 65
mol percent FeCl$_3$ and 35 to 52 mol percent NaCl while
still remaining molten or liquid above 250$^\circ$C.
Preferably, the eutectic salt complex comprises from 50
to 55 mol percent FeCl$_3$ and from 45 to 50 mol percent
NaCl, or its equivalent in the form of NaFeCl$_4$.

The resulting eutectic salt slurry is
preferably continuously recycled from an accumulated
inventory in a storage tank or tanks to the adsorber.
The low vapor pressure of the eutectic salt provides an
economic and inherently safe in-process chlorine storage
alternative.  For example, approximately 29,000 gal (110
m$^3$) of eutectic will provide an estimated 8 hours'
hold-up for an 18 T/hr TiO$_2$ plant processing ilmenite
ore having 60-61% TiO$_2$.  The eutectic can then be
returned to the system as needed following start-up.
Extended hold-up (greater than 24 hours) can be provided
by both hot (>165$^\circ$C) and cold storage tanks at
essentially zero pressure.  The eutectic salt represents
approximately 48% by weight potentially available
chlorine.

Molten salt is pumped under pressure from the
adsorber loop to the oxidizer loop described below.

### 3. Oxidation of Ferric Chloride

The eutectic salt mixture resulting from the ferric chloride adsorption stage is fed under pressure to the third process stage, wherein ferric chloride is reacted with oxygen under pressure, in a liquid phase oxidation reactor, to produce chlorine and by-products $Fe_2O_3$ and $NaCl$. Key aspects of the present invention are use of a molar excess of eutectic salt and reaction in the liquid phase. These improvements eliminate operational difficulties attributable to handling of solid/gas mixtures, as required by other proposed ferric chloride oxidation schemes.

The oxidation reactor is a continuous liquid phase reactor in which ferric chloride and oxygen are reacted on the surface of iron oxide particles suspended in molten eutectic salt. The reaction rate is known to be proportional to the solids surface area, to increase with temperature in the range $300^{\circ}C$ to $500^{\circ}C$, and to be proportional to the square root of the oxygen partial pressure.

Within the oxidation reactor or oxidizer, oxygen flows counter-currently to a large molar excess, for example from a 3:1 to 100:1 molar salt to oxygen ratio, of molten eutectic salt at temperatures from about $300^{\circ}C$ to about $500^{\circ}C$. Preferably, oxidizer temperatures are maintained from about $400^{\circ}C$ to about $500^{\circ}C$, and most preferably in the range from about $440^{\circ}C$ to about $460^{\circ}C$. Chlorine exits the oxidizer under pressure, at concentrations from about 50% to about 90% by weight. Preferably, pressures within the oxidizer are maintained from about 800 to about 1200 kPa (8-12 atmospheres), and most preferably, from about 950 to about 1050 kPa. A liquid slurry stream comprising eutectic salt, $Fe_2O_3$, and $NaCl$ exits the oxidizer to a hydroclone, from which a side stream can be withdrawn for further treatment as described below. The balance of the stream is recycled to the oxidizer.

The countercurrent oxidizer is operated at conditions providing low conversion of ferric chloride (in the eutectic salt) and high conversion of oxygen at elevated pressures. These conditions ensure that product chlorine concentration is high, due to the low final oxygen concentration and low vapor pressure of the eutectic salt at high pressures and moderate ($400^{o}C$–$500^{o}C$) temperatures. The chlorine product gas contains essentially no unreacted ferric chloride, since the vapor pressure of ferric chloride over the excess eutectic salt is less than 0.2 mm Hg at $450^{o}C$. At a reactor pressure of about 1000 kPa (150 psig; 10 atm), this is appoximately equivalent to 23 ppm ferric chloride in the product gas stream. Operation at elevated pressures provides not only a pressure head for chlorine return, but also increases oxidation rate.

Recycling of eutectic salt following oxidation provides a source of suspended solid iron oxide particles necessary to catalyze the oxidation reaction. Optionally, additional iron oxide solids can be routed to the oxidizer from one of the' by-product recycle streams described below. Laboratory observations of reaction kinetics indicate that $NaFeCl_4$ oxidation rates are proportional to the specific solid surface area per unit liquid slurry. Thus, if additional $Fe_2O_3$ solid catalyst is not added to the oxidizer at start-up, oxidation rates may be reduced until a sufficient level of solid $Fe_2O_3$ by-product accumulates in the oxidation process loop.

The rate of mass transfer of reaction components to the catalytic surface of suspended solids in the reactor is critical to the resulting oxidation rate. Thus, high oxygen mass velocities, for example, from about 50 to about 200 lbs. $O_2$ supplied to the

0232615

reactor per hour per $ft^2$ of reactor cross-section (G = 240 - 980 kg $O_2/hr/m^2$) are required for efficient operation. Preferably, oxygen mass velocities are maintained in the range from 80 to 150 lbs. $O_2/hr/ft^2$ (G = 390 - 730 kg $O_2/hr/m^2$).

Reactor size and configuration are dictated by desired reactant residence times and reactant mass velocities. Generally, length to diameter ratios ranging from 50 to 200 should be employed to provide reactant residence times in a preferred range of 5 to 20 seconds. Residence times can vary, however, between 0.1 and 100 seconds, depending on overall process design. Required oxidation reactor volumes will generally be in the range of 10 to 50 $ft^3$ per 100 lbs. (6.2 - 31 l/kg) $Cl_2$ output per hour, preferably from about 15 to about 30 $ft^3$ per 100 lbs. (9.4 - 18.8 l/kg) $Cl_2$ output per hour.

In order to maintain clear interior surfaces within the oxidizer and associated piping, scrub solids such as sand, finely ground ore, or other suitable materials can optionally be added to the oxidation loop.

### 4. Recycle of Residual Eutectic ·

The present invention provides a fourth process stage, involving recycling of residual eutectic to the oxidation reactor. Recycling residual eutectic salt provides the solid iron oxide surface necessary for high oxidation rates at relatively low ($300°C-500°C$) temperatures. A side stream from the oxidation loop is cooled to ambient temperatures, pulverized or otherwise treated to reduce particle size, and subjected to physical materials separation processes to yield solid $Fe_2O_3$ essentially free of eutectic salt, and a stream of solid chloride salts for recycle to the adsorption stage.

The liquid eutectic stream circulating through the oxidizer is separated from product chlorine gas by conventional means. The resulting chlorine can be recycled directly to the plant chlorinator, or if necessary, partially condensed and stored, providing a chlorine reserve. A portion of the circulating eutectic stream is preferably cooled and pulverized to provide a solids stream containing by-product $Fe_2O_3$, NaCl, and residual eutectic.

Cooling, solidifying, and pulverizing the side stream from the oxidizer provides a means for separating iron oxide from the eutectic salt at ambient temperature and pressure while largely eliminating corrosion problems. Solid iron oxide produced by the oxidizer has a density (specific gravity) of 5.1, is paramagnetic, a conductor, and resistant to grinding. On the other hand, the eutectic salt has a density of about 2, is expected to be non-magnetic and a non-conductor, and grinds readily. Accordingly, such solids separation techniques as dry tabling, elutriation, magnetic separation, and electrostatic separation can be applied to separate iron oxide from the remaining components of the oxidizer effluent stream. These ambient temperature physical separation techniques should be conducted in a dry, inert atmosphere.

The eutectic salt and sodium chloride stream (containing some iron oxide) is recycled to the adsorption step of the process. The iron oxide stream is washed with water to remove residual chloride salts, producing an environmentally inert iron oxide and a liquid chloride salt waste stream.

## Flowsheet Description

The drawing illustrates process flows involved in operating a ferric chloride adsorption/recycling process in accordance with the present invention.

Referring now to the drawing, an exit stream from a titanium dioxide plant chlorinator in ferric operation leaves the chlorinator (not shown) via chlorinator outlet 1 and is cooled in flue cooling system 2. After cooling to about 400°C, the chlorinator effluent stream exits flue cooler 2 and is introduced via inlet 3 to cyclone solids separators 4. Solids separated from the chlorinator product stream by cyclone solids separators 4 are collected via outlets 6 and optionally further classified prior to recycle to the chlorinator.

The cooled, cleaned gas mixture then exits the solids separation stage via conduit 7, which enables introduction of the gas mixture to adsorber 8. Molten eutectic salt ($NaFeCl_4$ and $NaCl$) slurry flows from salt storage reservoir 12 via pump 11 through conduit 16 to adsorber inlet 9. From inlet 9, the salt slurry is injected via orifice 10 into adsorber 8 and into countercurrent contact with the gas mixture injected via conduit 7. Ferric chloride and aluminum chloride are entrained within the flow of molten eutectic by adsorption and reaction, and hence separated from the stream of gas exiting the adsorber via outlet 42. This stream, which contains $TiCl_4$, can then be subjected to additional purification processes, e.g., partial condensation, filtration, etc.

Eutectic slurry containing entrained $FeCl_3$ exits adsorber 8 via drain 14 for return to salt storage reservoir 12. Also provided from conduit 16 downstream from slurry pump 11 is a side-stream outlet 15, leading to storage tank 40, from which a stream flows to pump 17 and thence to conduit 18. The salt slurry is pressurized by pump 17 to about 10 atmospheres prior to introduction to oxidizer 21. Oxidizer 21 is provided with an oxygen feed inlet 19, a chlorine product outlet 20, and a liquids outlet 22.

$FeCl_3$ and $NaFeCl_4$ are catalytically reacted with oxygen in oxidizer 21, resulting in production of chlorine gas which exits the oxidizer via outlet 20 for recycle to the plant chlorinator. The salt slurry containing oxidation by-products $Fe_2O_3$ and NaCl leaves oxidizer 21 via outlet 22 and is routed to hydroclone 23. From hydroclone 23, a stream of molten eutectic is recycled via storage tank 40 to conduit 18 via pump 17 to be incorporated into the molten eutectic stream continuously provided to oxidizer 21. The remainder of the salt stream is cooled and solidified in cooler 25 prior to being comminuted in pulverizer 41.

The resulting cooled, pulverized material is then routed to solids separator 27, which can be, for example, a counter-current series of mixers and dry tables maintained in a dry, inert atmosphere. By-product $Fe_2O_3$ is separated from the residual eutectic and NaCl and removed from the system via outlet 28. NaCl make-up can be introduced to the system via inlet 29. Eutectic and NaCl are recycled from the solids separator to the adsorber loop eutectic storage tank 12 via conduit 13. Exiting solids separator 27, stream 28 is washed with water (stream 43) in scrubber 46, producing an environmentally inert iron oxide stream 44 and a soluble salt waste stream 45.

The present invention is not limited to the system as described above, nor to the various embodiments described in the examples. Clearly, a variety of operating techniques and process arrangements are possible within the claimed scope of the present invention.

## Examples

The following examples illustrate particular aspects of the present invention. Examples 1-4 illustrate laboratory-scale $NaFeCl_4$ adsorption and oxidation experiments, and Example 5 illustrates operation of a pilot plant-scale ferric chloride adsorption/oxidation system. In the examples, all degrees are Celsius ($^o$C) and all percentages are by weight unless otherwise indicated.

Due to the sensitivity of eutectic salt preparations to oxidation, all samples of this material were prepared and handled in a dry box extensively purged with nitrogen. All glassware and metal equipment used in the dry box were pre-dried by heating.

A $NaFeCl_4$ eutectic salt sample was prepared according to the following procedure. 607.5 g of anhydrous $FeCl_3$ and 220.5 g NaCl were mixed in a 1 l stainless steel can in a nitrogen-purged dry box. This mixture was then heated to 300$^o$ under flowing nitrogen, using a standard electrically-heated resin kettle. The molten salt was then cooled and solidified. The resulting fused eutectic salt was broken out of the stainless steel can and pulverized prior to storage in sealed glass jars.

## Example 1

This experiment illustrates adsorption of ferric chloride by a bed of NaCl/$NaFeCl_4$ eutectic salt.

10 g of NaCl were placed on a bed support in a 2.0 cm diameter Pyrex tube. The tube was connected to a source of purging $N_2$ gas and placed in a tube furnace.

10 g of anhydrous ferrous chloride were placed in a 1.5 cm diameter Pyrex tube enclosed at one end with a glass frit. The tube was then inserted into the 2.0 cm tube described above, making a gas tight seal with the 2 cm tube outside the furnace. The glass frit was 0.5 cm from the NaCl on the bed support.

The resulting apparatus was then purged with $N_2$ to remove residual $O_2$ and moisture, while the temperature was increased to $450^o$.

Chlorine gas was then metered into the bed of ferrous chloride at measured rates from 20 mL/min to 60 mL/min for various measured times to produce a flow of ferric chloride gas. The ferric chloride gas passed through the glass frit and salt bed, where it instantaneously formed black $NaFeCl_4$ liquid.

Following each run, the salt bed containing $NaFeCl_4$ was dissolved in 2% $H_2SO_4$, made up to 250 mL, and analyzed for total chlorine and iron.

Using the apparatus and procedure described above, adsorption rates in excess of 200 lbs $FeCl_3$ per hour per $ft^3$ (3200 kg $FeCl_3$/hr/m$^3$) were demonstrated.

Product gases flowing through the apparatus were bubbled through an Erlenmyer flask containing an acidified 1.2 M KI solution to trap chlorine. The resulting solution was then titrated using sodium thiosulfate to determine equivalent chlorine adsorptions. At sufficiently high rates, it was expected that iron chloride gas or chlorine passing through the ferric chloride generator would break through the bed of eutectic used as adsorber. However, at the mamixum rates employed, less than 2% of the chlorine admitted to the apparatus was found to have passed through to the KI flask.

Table 1, below, summarizes the results of these ferric chloride adsorption experiments.

### Table 1
#### Adsorption of Ferric Chloride by $NaFeCl_4$ Eutectic Salt

| Run No. | Measured Average $FeCl_3$ Adsorption Rate | |
| --- | --- | --- |
| | (lbs./hr-Ft$_3$) | kg/hr-m$_3$ |
| A | 369 | 5910 |
| B | 82 | 1310 |
| C | 137 | 593 |
| D | 1136 | 2180 |
| E | 48 | 769 |
| E | 3168 | 2690 |
| F | 109 | 1750 |
| G | 113 | 1810 |
| H | 110 | 1760 |
| I | 181 | 2900 |
| J | 187 | 3000 |
| K | 185 | 2960 |
| L | 149 | 2390 |
| M | 303 | 4850 |
| N | 283 | 4530 |

### Example 2

A laboratory $NaFeCl_4$ oxidation reactor was prepared by assembling a glass 1 l resin kettle (100 mm I.D.) with a sealing cover in a conventional electrical resistance heater. The reactor cover was fitted with gas inlet and outlet lines and a 500$^o$ thermometer, as well as a fitting for a rotary stirrer. The gas inlet conduit was inserted through the reactor cover and extended along an inner surface of the kettle to a point just above the kettle bottom. The gas outlet conduit extended just below the cover, in order to sample gases at the top of the sealed reactor. The rotary stirrer extended axially through the cover to the bottom of the reactor, and was fitted with 4 25 x 10 mm glass blades. The interior of the reactor was fitted with 3 110 x 15 mm glass baffles to improve mixing.

Samples of 641 g of $NaFeCl_4$ eutectic salt, prepared as described above, and 320 g $Fe_2O_3$, were placed in the reactor in a nitrogen-purged dry box, and then the resulting assembly was sealed and heated to 450$^o$. Nitrogen and oxygen were metered into the reactor through the gas inlet line via calibrated flow meters. Chlorine produced by the reactor was measured by collecting timed (usually less than 1 minute) samples in flasks containing KI, substantially as described in Example 1.

In addition, gas samples were obtained directly from the reactor using a 20 mL glass syringe. The syringe sample was then transferred to a 250 mL Erlenmyer flask fitted with a septum, containing approximately 50 mL 1.2 M KI solution. Methods were standardized using chlorine samples drawn from commercially-supplied cylinders.

Table 2, below, summarizes the results of a series of oxidation experiments designed to determine the effects of oxygen mass velocity upon reaction rate. The results indicate that over the range of mass velocities employed, chlorine production, and hence, reaction rate, increased with oxygen mass velocity (G). Oxygen mass velocity is expressed as mass $O_2$ supplied to the reactor per hour per unit of reactor cross-section. Chlorine production is expressed as mass $Cl_2$ produced per hour per unit reactor volume.

Table 2: Liquid Phase Oxidation of $NaFeCl_4$
Eutectic Salt: Effect of Oxygen Mass Velocity

| Run No. | Oxygen Mass Velocity (G) | | Chlorine Produced | |
|---------|--------------------------|--------------------------|-------------------|----------------|
|         | $(lb/hr\text{-}ft^2)$    | $(kg/hr\text{-}m^2)$     | $(lb/hr\text{-}ft^3)$ | $(kg/hr/ft^3)$ |
| A       | 0.89                     | 4.33                     | 9.36              | 150            |
| B       | 4.65                     | 22.6                     | 28.33             | 454            |
| C       | 6.81                     | 33.2                     | 44.39             | 711            |
| D       | 29.70                    | 145                      | 91.08             | 1459           |

## Example 3

In order to determine the effect of stirring velocity upon reaction rate, samples of $NaFeCl_4$ were oxidized substantially as described in Example 2, above, except that the stirring rate was varied. The results are set forth in Table 3, below. The results obtained suggest that reaction rates are determined by mass transfer rates.

Table 3: Liquid Phase Oxidation of $NaFeCl_4$
Eutectic Salt:  Effect of Varied Stirring Rates

| | Oxygen Mass Velocity | | Stirring | Chlorine Produced | |
|---|---|---|---|---|---|
| | $\frac{lb}{hr\text{-}ft_2}$ | $\frac{kg}{hr\text{-}m_2}$ | Rate | $\frac{lb}{hr\text{-}ft_3}$ | $\frac{kg}{hr\text{-}m_3}$ |
| Run No. | | | (rpm) | | |
| A | 0.76 | 3.7 | 505 | 2.54 | 40.7 |
| B | 0.89 | 4.3 | 875 | 5.85 | 93.7 |
| C | 0.89 | 4.3 | 1545 | 9.36 | 150.0 |

## Example 4

In order to determine the effects of oxygen partial pressure upon reaction rates, a series of tests were made in which the gas mass velocity was held constant and the partial pressure of oxygen was varied by adding varying amounts of nitrogen as diluent gas. Each of the runs summarized below were conducted substantially similarly to the experiments summarized in Examples 2 and 3.  Reactor temperatures were maintained from $447^O$ to $451^O$ in each experiment.  The results, which are set forth in Table 4, below, indicate that the reaction rate observed was proportional to the square root of the oxygen partial pressure.

Table 4: Liquid Phase Oxidation of $NaFeCl_4$
Eutectic Salt:  Effect of Oxygen Partial Pressure

| | Gas Mass Velocity | | Oxygen | Chlorine Produced | |
|---|---|---|---|---|---|
| | $\frac{lb}{hr\text{-}ft_2}$ | $\frac{kg}{hr\text{-}m_2}$ | Conc. | $\frac{lb}{hr\text{-}ft_3}$ | $\frac{kg}{hr\text{-}m_3}$ |
| Run No. | | | (mol%) | | |
| A | 1.04 | 5.08 | 8.84 | 2.59 | 41.5 |
| B | 1.06 | 5.17 | 7.86 | 2.63 | 42.1 |
| C | 1.06 | 5.17 | 7.84 | 2.72 | 43.6 |
| D | 1.22 | 5.96 | 46.26 | 6.34 | 102.0 |
| E | 1.23 | 6.00 | 46.09 | 6.63 | 106.0 |
| F | 1.18 | 5.76 | 46.76 | 5.45 | 87.0 |
| G | 1.37 | 6.69 | 84.40 | 8.17 | 131.0 |
| H | 1.49 | 7.27 | 82.23 | 10.81 | 173.0 |

## Example 5

Gases withdrawn from a $TiO_2$ chlorinator via an exit gas cooler are introduced to a spray column adsorber at a gas flow rate of 28 cfm (0.0132 $m^3$/s; 386 lbs./hr; 175 kg/hr). This gas mixture contains 56.7% $TiCl_4$, 4.66% ferric chlorides, 24.6% $CO_2$, and small quantities of impurities. The temperature of this gas stream is 447° and the pressure is 8.3 psig (57 kPa). The adsorber is a cylindrical nickel-chromium steel alloy (e.g., Inconel ) vessel 2 m in diameter and 6 m in length, having a gas entry port located near the base of the column and a gas exit port situated near the column head. A spray outlet is provided inside the head of the adsorber, through which pumped liquids can be introduced to the interior of the adsorber. An exit outlet is provided at the base of the adsorber.

A slurry of $NaFeCl_4$ eutectic salt comprising 4.5% NaCl is pumped from a first storage tank to the head of the spray column adsorber. A flow rate of 0.34 gpm (1.29 l/min; 397 lbs/hr; 180 kg/hr) is maintained, at a stream temperature of 200° and pressure of 16 psig (110 kPa).

The exit gas stream from the spray column adsorber, which now contains 59.8% $TiCl_4$, 26.1% $CO_2$, 4.58% CO, and certain other impurities, is routed to a $TiCl_4$ purification system. The temperature of the exit gas stream is 276° and the pressure is 5.9 psig (41 kPa). The flow rate of this stream is 23 cfm (0.0109 $m^3$/s; 341 lb./hr; 155 kg/hr).

A liquid mixture containing $NaFeCl_4$ eutectic salt is continuously withdrawn from the exit outlet at the bottom of the spray column adsorber at a rate of 0.38 gpm (1.4 l/min; 442 lb./hr; 200 kg/hr) and returned to the first salt storage tank. The temperature of this liquid stream is 370° and the pressure is 8.0 psig (55 kPa). The stream contains 0.52% excess NaCl. A NaCl recycle stream (also described in greater detail below) is routed to the first salt storage tank at 120° and at a flow rate of 51 lb./hr (23.1 kg/hr).

A $NaFeCl_4$ eutectic salt stream is continuously pumped from the first storage tank in the adsorber system to a second salt storage tank, which represents part of the oxidation system. The temperature of the eutectic salt stream is 300°, and the flow rate is 96 lb./hr (43.5 kg/hr).

The oxidation system comprises the second $NaFeCl_4$ eutectic salt storage tank, which is connected by a pump and suitable connecting line to a liquid entry port of an oxidizer. The eutectic salt slurry is pumped from the second salt storage tank to the oxidizer at a temperature of 300°, at a pressure of 250 psig (1734 kPa), and at a flow rate of 423 lbs./hr (192 kg/hr). In addition, the oxidizer is connected to an oxygen source via a preheater.

An oxygen stream, flowing from the oxygen source at a rate of 7.6 lbs./hr (3.5 kg.hr) to the preheater, is heated to 760° and then introduced to the oxidizer at 250 psig (1724 kPa). The oxidizer operates at a temperature of 450°, at 224 psig (1545 kPa) and at an inlet oxygen mass-velocity greater than or equal to 100 lbs. $O_2/hr/ft^2$ (488 kg $O_2/hr/m^2$).

Chlorine, nitrogen, and oxygen (present at a concentration of 2.7 mol%) flowing from the top of the oxidizer are cooled, filtered, and recycled to a chlorination reactor (not shown) at a flow rate of 31 lbs./hr (14.1 kg/hr).

A slurry of $NaFeCl_4$ eutectic salt, iron oxide, and salt discharged from the oxidizer at a flow rate of 399.6 lbs/hr (181.2 kg/hr) is directed to a hydroclone where a high solids fraction (39% solids, 72.6 lbs/hr, 32.9 kg/hr) is transferred to a cooler. The hydroclone overflow is recycled to the second $NaFeCl_4$ eutectic salt slurry storage tank.

Material exiting the cooler at $120^O$ is pulverized under an inert atmosphere to minus 150 mesh and then transferred to a counter-current solid-solid extraction unit consisting of five sets of mixers and dry table units, all contained within an inert atmosphere. 1 lb/hr (0.45 kg/hr) nitrogen and 9.5 lbs/hr (4.31 kg/hr) of granular salt is used counter-current to the flow from the pulverizer.

A concentrate of eutectic salt, salts, nitrogen, and a trace of iron oxide are recycled at a rate of 51 lbs/hr (23.1 kg/hr) to the first eutectic salt storage tank in the adsorber system.

The raffinate stream exiting the solid-solid extraction unit consists of iron oxide, salts, and a trace of eutectic salt. This stream is discharged at a rate of 32.1 lbs/hr (14.6 kg/hr) to a water scrubber for clean-up. From the water scrubber, a stream of washed, inert iron oxide is produced at a rate of 21.7 lbs/hr (9.84 kg/hr) for landfilling, and a small waste stream consisting of sodium chloride, miscellaneous chlorides, and iron chloride is produced at a rate of 10.4 lbs/hr (4.72 kg/hr).

0232615

## CLAIMS

1.    A continuous process for adsorbing ferric chloride from a titaniferous ore chlorinator exit gas stream, and for producing chlorine from the adsorbed ferric chloride, comprising:

(a)    cooling the exit gas stream to a temperature from about $300^{\circ}$C to about $500^{\circ}$C;

(b)    contacting the cooled exit gas stream with a liquid NaCl-FeCl$_3$ eutectic salt complex, at a temperature from about $200^{\circ}$C to about $350^{\circ}$C, to form a eutectic salt mixture comprising adsorbed FeCl$_3$;

(c)    separating nonadsorbed components of the gas stream from the eutectic salt mixture;

(d)    contacting, in a liquid phase oxidation zone, at a temperature from about $300^{\circ}$C to about $500^{\circ}$C and at a pressure from about 500 to about 5000 kPa, a molar excess of the eutectic salt mixture with oxygen to produce chlorine;

(e)    withdrawing chlorine from the oxidation zone; and

(f)    recycling unreacted components of the eutectic salt mixture to the oxidation zone.

2.    A process according to Claim 1, wherein the eutectic salt mixture comprises about 50 to about 55 mol percent FeCl$_3$ and about 45 to about 50 mol percent NaCl or their equivalent as NaFeCl$_4$.

3.    A process according to Claim 1 or 2, wherein the eutectic salt mixture and oxygen are contacted countercurrently in the oxidation zone.

4. A process according to Claim 1, 2 or 3, wherein the oxidation zone is maintained at a temperature from about 400$^{o}$C to about 500$^{o}$C and at a pressure from about 800 to about 1200 kPa.

5. A process according to Claim 4, wherein the oxidation zone is maintained at a temperature from about 440$^{o}$C to about 460$^{o}$C and at a pressure from about 950 to about 1050 kPa.

6. A process according to any preceding claim, wherein oxygen is supplied to the oxidation zone at a mass velocity from about 240 to about 1000 kg $O_2$ $hr^{-1}$ $m^{-2}$.

7. A process according to Claim 6, wherein oxygen is supplied to the oxidation zone at a mass velocity from about 400 to about 800 kg $O_2$ $hr^{-1}$ $m^{-2}$.

8. A process according to any preceding claim, wherein reactant residence time in the oxidation zone is from about 5 to 20 seconds.

9. A process according to any preceding claim, wherein a portion of the eutectic salt mixture is withdrawn from the oxidation zone, cooled, pulverized, and segregated into $Fe_2O_3$-containing and chloride salt-containing by-product streams.

10. A process according to Claim 9, wherein the by-product streams are segregated by elutriation, dry tabling, magnetic separation, or electrostatic separation.

11. A process according to Claim 10, wherein the by-product streams are segregated by dry tabling in an inert atmosphere.

12. A process according to any preceding claim, wherein unreacted ore and coke solids are rejected from the exit gas stream prior to contact with eutectic salt complex.